(19) Europäisches Patentamt
European Patent Office
Office européen des brevets

(11) **EP 4 328 024 A1**

(12) **EUROPEAN PATENT APPLICATION**
published in accordance with Art. 153(4) EPC

(43) Date of publication:
**28.02.2024 Bulletin 2024/09**

(21) Application number: **22791427.2**

(22) Date of filing: **16.03.2022**

(51) International Patent Classification (IPC):
**B32B 27/32** (2006.01) **B32B 9/00** (2006.01)
**B32B 27/30** (2006.01) **B65D 65/40** (2006.01)

(52) Cooperative Patent Classification (CPC):
**B32B 9/00; B32B 27/30; B32B 27/32; B65D 65/40;**
Y02W 30/80

(86) International application number:
**PCT/JP2022/012058**

(87) International publication number:
**WO 2022/224647 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.04.2021 JP 2021073608**

(71) Applicant: TOYOBO CO., LTD.
**Osaka-shi, Osaka 530-0001 (JP)**

(72) Inventors:
• **IWATA, Daisuke**
  **Inuyama-shi, Aichi 484-8508 (JP)**
• **YAMAZAKI, Atsushi**
  **Inuyama-shi, Aichi 484-8508 (JP)**
• **Nakano, Mahiro**
  **Inuyama-shi, Aichi 484-8508 (JP)**
• **YAMAGUCHI, Yuya**
  **Osaka-shi Osaka 530-8230 (JP)**

(74) Representative: **Vossius & Partner
Patentanwälte Rechtsanwälte mbB
Siebertstrasse 3
81675 München (DE)**

(54) **LAMINATED FILM AND PACKAGING MATERIAL**

(57) It is an object of the present invention to provide a laminated film which can form a laminated structure mainly composed of a polypropylene film and composed of substantially a single resin species having a low environmental load, and has required performances such as gas barrier properties and adhesiveness required for a packaging material, and processing suitability. A laminated film includes: a substrate film; and a coating layer including a polyvinyl alcohol-based copolymer and an inorganic lamellar compound on at least one surface of the substrate film. The laminated film satisfies the following requirements (a) to (d): (a) the substrate film is a stretched film containing a propylene-based resin; (b) an attached amount of the coating layer is 0.10 g/m$^2$ or more and 0.50 g/m$^2$ or less; (c) in a total reflection infrared absorption spectrum of the laminated film, a ratio (P1/P2) of a peak intensity (P1) having an absorption maximum in a domain of 1040 $\pm$ 10 cm$^{-1}$ to a peak intensity (P2) having an absorption maximum in a domain of 3300 $\pm$ 10 cm$^{-1}$ is within a range of 3.0 to 25.0; and (d) a Martens hardness of a coating layer-side surface of the laminated film measured with a test force of 0.1 mN is 248 N/mm$^2$ or less.

EP 4 328 024 A1

**Description**

TECHNICAL FIELD

The present invention relates to a laminated film. More specifically, the present invention relates to a gas barrier coating film which has a low environmental load in production and disposal and has excellent gas barrier performance and sufficient adhesive strength as a packaging material.

BACKGROUND ART

In recent years, regulations for reducing the use of disposable plastics have been strengthened in various countries including Europe. Against this background, there is growing international awareness of resource circulation and growing waste problems in emerging countries. Therefore, for plastic packaging materials required for foods and pharmaceuticals and the like, environmentally friendly products are required from the viewpoint of 3R (recycle, reuse, reduce).

Examples of performance required for the above-described environmentally friendly packaging material include (1) including a recyclable material, (2) having gas barrier performance that can cut off various gases and extend the best-before expiration, and (3) having a laminated structure with a less environmental load (for example, no organic solvent is used, the amount of materials used itself is small, and recycling by monomaterialization is possible).

In recent years, use of a polypropylene film has attracted attention in order to enable the above (2) and (3). The polypropylene film is generally used in a wide range of applications such as packaging of foods and various products, electrical insulation, and surface protection films. The polypropylene film can exhibit high water vapor barrier properties from its molecular structure. Furthermore, as a sealant to be bonded to a surface substrate film, a polypropylene-based or polyethylene-based heat-sealing resin is generally used, and therefore for example, by using a polypropylene film for a surface substrate and an un-stretched polypropylene sheet for the sealant, it is possible to achieve the monomaterialization of the entire packaging material while having gas barrier properties, and it is possible to design a packaging material which is environmentally friendly such as being easily recycled.

However, regarding the gas barrier properties of (2), the polypropylene film has water vapor barrier properties, but does not have a sufficient value as compared with, for example, a transparent inorganic vapor-deposited polyester film generally considered to have excellent water vapor barrier properties, and disadvantageously has very poor oxygen barrier properties. Meanwhile, a film obtained by laminating, on a polypropylene film, a polymer resin composition generally said to have relatively high oxygen barrier properties, such as polyvinyl alcohol, an ethylene vinyl alcohol copolymer, a polyvinylidene chloride resin, or polyacrylonitrile, has been used (see, for example, Patent Documents 1 to 3).

However, since the gas barrier coat film containing the polymer resin composition such as polyvinyl alcohol or an ethylene vinyl alcohol copolymer has high humidity dependency, the gas barrier properties of the gas barrier coat film are deteriorated under high humidity. The polyvinylidene chloride resin and the polyacrylonitrile have low humidity dependency, but have problems that barrier value as absolute value are not sufficient, and in addition there is a high risk that harmful substances are generated at the time of disposal and incineration.

As a method for improving the humidity dependency of a vinyl alcohol-based resin, gas barrier coat films have been proposed, in which a coating layer obtained by mixing a silane-based crosslinking agent with the vinyl alcohol-based resin is laminated. In this case, since the vinyl alcohol-based resin is crosslinked by silanol groups, the vinyl alcohol-based resin has low humidity dependency and exhibits good gas barrier properties (see, for example, Patent Documents 4 and 5).

However, these gas barrier coat films require a sufficient heat treatment for crosslinking, and when a substrate is a polypropylene film, not only sufficient properties as a packaging material cannot be satisfied due to deterioration in mechanical properties and heat wrinkles during processing, but also a large amount of heat energy is required for a heat treatment during processing, and therefore the gas barrier coat films are not preferable also from the viewpoint of an environmental load. Furthermore, water vapor barrier performance was still insufficient.

Meanwhile, as means for further improving the barrier performance, gas barrier coat films have been proposed, in which a resin layer containing inorganic lamellar particles having a specific particle size and aspect ratio and a vinyl alcohol-based resin is laminated. In this case, a diverting effect on gas molecules is generated by the inorganic lamellar particles present in a dispersed form in the resin layer, and good gas barrier properties are exhibited (see, for example, Patent Documents 6 and 7).

However, in these gas barrier coat films, the inorganic lamellar particles are often not uniformly dispersed in the coating film. As a result, the adhesiveness of the gas barrier coat films to a substrate film is inhibited, and therefore the lamination strength may be reduced. Sufficiently satisfiable performance has not been obtained for improving both oxygen barrier properties and water vapor barrier properties.

All of the above-described barrier coat layers need to be laminated to have a film thickness of at least 0.5 um or more in order to exhibit sufficient barrier performance. When the thickness of the coat layer is large, recycling may be difficult, and it is not suitable from the viewpoint of monomaterialization due to a single material. Furthermore, there is a problem of printing defect due to coating nonuniformity and unevenness in processing steps such as printing.

PRIOR ART DOCUMENT

PATENT DOCUMENTS

Patent Document 1: JP-A-2000-52501
Patent Document 2: JP-A-H04-359033
Patent Document 3: JP-A-2003-231221
Patent Document 4: JP-A-H04-345841
Patent Document 5: JP-A-2006-95782
Patent Document 6: JP-A-H09-111017
Patent Document 7: JP-A-2005-35167

SUMMARY OF THE INVENTION

PROBLEMS TO BE SOLVED BY THE INVENTION

In Patent Documents 1 to 3 described above, in addition to insufficient barrier performance, an environmentally friendly design has not been studied. In Patent Documents 4 and 5, proper coating processing on a polypropylene film has not been studied, and water vapor barrier properties have not been sufficiently discussed. In Patent Document 6, improvement in adhesiveness and water vapor barrier properties have not been studied. In Patent Document 7, oxygen barrier properties have not been studied. In any of the documents, improvement in processability and consideration for the environment by thinning the coat layer have not been made, and consideration for the environment by thinning an adhesive layer when forming a laminated structure has not also been made.

In other words, conventionally, there has been no material satisfying all of the following three points as the performances required for the above-mentioned environmentally friendly packaging material: (1) containing a recyclable material as a constituent material; (2) having gas barrier performance capable of blocking various gases and extending the best-before expiration; and (3) forming a laminated structure that is likely to be recycled and has a low environmental load (monomaterialization).

The present invention has been made in view of the problems of the prior art.

That is, an object of the present invention is to provide a laminated film which can form a laminated structure mainly composed of a polypropylene film and composed of substantially a single resin species having a low environmental load, and has required performances such as gas barrier properties and adhesiveness required for a packaging material, and processing suitability.

MEANS FOR SOLVING THE PROBLEMS

The present inventors have found that a high-quality film having greatly improved gas barrier performance, a low environmental load, and an improved adhesive force can be provided by laminating a predetermined coat layer corresponding to required performance on a polypropylene film, thereby completing the present invention.

That is, the present invention comprises the following constitutions.

1. A laminated film comprising:

a substrate film; and
a coating layer including a polyvinyl alcohol-based copolymer and an inorganic lamellar compound on at least one surface of the substrate film,
wherein the laminated film satisfies the following requirements (a) to (d):

(a) the substrate film is a stretched film containing a propylene-based resin;
(b) an attached amount of the coating layer is 0.10 $g/m^2$ or more and 0.50 $g/m^2$ or less;
(c) in a total reflection infrared absorption spectrum of the laminated film, a ratio (P1/P2) of a peak intensity (P1) having an absorption maximum in a domain of 1040 $\pm$ 10 cm$^{-1}$ to a peak intensity (P2) having an absorption maximum in a domain of 3300 $\pm$ 10 cm$^{-1}$ is within a range of 3.0 to 25.0; and
(d) a Martens hardness of a coating layer-side surface of the laminated film measured with a test force of 0.1 mN is 248 N/mm$^2$ or less.

2. The laminated film according to 1., wherein the coating layer on the laminated film has an arithmetic average roughness of 2.0 to 8.0 nm in a 2-$\mu$m square.

3. The laminated film according to 1. or 2., wherein the laminated film has an oxygen transmission rate of 50 ml/m$^2$·d·MPa or less in an environment of 23°C and 65% RH and a water vapor transmission rate of 4 g/m$^2$ ·d or less in an environment of 40°C and 90% RH.

4. The laminated film according to any one of 1. to 3., wherein the inorganic lamellar compound of the coating layer contains a montmorillonite-based compound as a constituent component.

5. A packaging material obtained by laminating an olefin-based sealant layer on one surface of the laminated film according to any one of 1. to 4..

EFFECT OF THE INVENTION

By such a technique, the present inventors can provide a laminated film having required performances such as barrier properties, adhesiveness, and processability required for a packaging material in consideration of the environment. In particular, since the adhesive force of a laminated product can be improved and a sufficient adhesive force can be exhibited even if the thickness of an adhesive layer is suppressed, the consumption of an adhesive to be used is also suppressed, leading to further reduction in an environmental load.

MODE FOR CARRYING OUT THE INVENTION

Hereinafter, the present invention will be described in detail.

[Substrate film layer]

A propylene-based resin stretched film to be used as a substrate film in the present invention is preferably a biaxially stretched film. As the biaxially stretched polypropylene-based resin film, known biaxially stretched polypropylene-based resin films can be used, and raw materials and mixing ratios and the like thereof are not particularly limited. For example, the film may be made of a polypropylene homopolymer (propylene homopolymer), a random copolymer or a block copolymer containing propylene as a main component and one or two or more selected from $\alpha$-olefins such as ethylene, butene, pentene, and hexene, or a mixture of two or more of these polymers. For the purpose of modifying the physical properties thereof, known additives such as an antioxidant, an anti-static agent, and a plasticizer may be added, and for example, a petroleum resin and a terpene resin and the like may be added.

The biaxially stretched polypropylene-based resin film used in the present invention may be a single-layer film, or may be a laminated film in which a plurality of resin films including the biaxially stretched polypropylene-based resin film are laminated. The kind, lamination number, and lamination method and the like of a laminated body in the case of forming the laminated film are not particularly limited, and can be optionally selected from known methods depending on the object.

In the present invention, a polypropylene resin constituting the substrate film is preferably a propylene homopolymer that does not substantially contain a comonomer, and even when the comonomer is contained, the amount of the comonomer is preferably 0.5 mol% or less. The upper limit of the amount of the comonomer is more preferably 0.3 mol%, and still more preferably 0.1 mol%. Within the above ranges, crystallinity is improved, a heat shrinkage rate at a high temperature is reduced, and heat resistance is improved. A small amount of the comonomer may be contained as long as the crystallinity is not significantly lowered.

The polypropylene resin constituting the substrate film preferably contains a propylene homopolymer obtained only from a propylene monomer, and it is most preferable that the propylene homopolymer does not contain a heterologous bond such as a head-to-head bond.

The lower limit of a xylene-soluble content of the polypropylene resin constituting the substrate film is preferably 0.1% by mass from a practical viewpoint. The upper limit of the xylene-soluble content is preferably 7% by mass, more preferably 6% by mass, and still more preferably 5% by mass. Within the above ranges, crystallinity is improved, a heat shrinkage rate at a high temperature is further reduced, and heat resistance is improved.

In the present invention, the lower limit of the melt flow rate (MFR) (230°C, 2.16 kgf) of the polypropylene resin is preferably 0.5 g/10 min. The lower limit of the MFR is more preferably 1.0 g/10 min, still more preferably 2.0 g/10 min, particularly preferably 4.0 g/10 min, and most preferably 6.0 g/10 min. Within the above ranges, a mechanical load is small, facilitating extrusion and stretching. The upper limit of the MFR is preferably 20 g/10 min. The upper limit of the MFR is more preferably 17 g/10 min, still more preferably 16 g/10 min, and particularly preferably 15 g/10 min. Within the above ranges, stretching is facilitated, thickness unevenness is reduced, a stretching temperature and a heat setting temperature are likely to be increased, a heat shrinkage rate is further reduced, and heat resistance is improved.

From the viewpoint of heat resistance, the substrate film may be a uniaxially stretched film in a machine direction (MD direction) or a transverse direction (TD direction), but is preferably a biaxially stretched film. In the present invention, at least uniaxial stretching makes it possible to obtain a film having high heat resistance with a low heat shrinkage rate at a high temperature that cannot be expected with a conventional polypropylene film. Examples of a stretching method include a simultaneous biaxial stretching method and a sequential biaxial stretching method, and the sequential biaxial stretching method is preferable from the viewpoint of achieving satisfactory planarity, dimensional stability, and thickness nonuniformity and the like.

In the sequential biaxial stretching method, a polypropylene resin is heated and melted with a uniaxial or biaxial extruder so as to have a resin temperature of 200°C or higher and 280°C or lower. The melted product is formed in a sheet shape from a T-die, and extruded onto a chill roll having a temperature of 10°C or higher and 100°C or lower to obtain an un-stretched sheet. Subsequently, the un-stretched sheet can be roll-stretched at a stretching ratio of 3.0 or more and 8.0 or less in the machine direction (MD direction) at a temperature of 120°C or higher and 165°C or lower, preheated with a tenter, and then stretched at a stretching ratio of 4.0 or more and 20.0 or less in the transverse direction (TD direction) at a temperature of 155°C or higher and 175°C or lower. Furthermore, after biaxial stretching, a heat setting treatment can be performed while relaxation of 1% or more and 15% or less is allowed at a temperature of 165°C or higher and 175°C or lower.

In order to impart handleability (for example, winding properties after lamination) to the substrate film to be used in the present invention, it is preferable that particles are contained in the film to form protrusions on the surface of the film. Examples of the particles to be contained in the film include inorganic particles such as silica, kaolinite, talc, calcium carbonate, zeolite, and alumina particles, and heat-resistant polymer particles such as acrylic, PMMA, nylon, polystyrene, polyester, and benzoguanamine-formalin condensate particles. From the viewpoint of transparency, the content of the particles in the film is preferably small, and for example, is preferably 1 ppm or more and 1000 ppm or less. Furthermore, it is preferable to select particles having a refractive index close to that of a resin to be used from the viewpoint of transparency. In order to impart various functions to the film as necessary, an antioxidant, an ultraviolet absorber, an anti-static agent, a dye, a lubricant, a nucleating agent, a pressure-sensitive adhesive, an antifogging agent, a flame retardant, an anti-blocking agent, and an inorganic or organic filler and the like may be contained.

Resins other than the polypropylene resin to be used in the present invention may be contained in the film as long as the object of the present invention is not impaired for the purpose of, for example, improving the mechanical properties of the substrate film and the adhesiveness of the gas barrier coat layer to an ink layer or an adhesive layer to be laminated on the gas barrier coat layer. Examples thereof include polypropylene resins different from those described above, random copolymers which are copolymers of propylene and ethylene and/or an α-olefin having 4 or more carbon atoms, and various elastomers.

In the present invention, the thickness of the substrate film is optionally set according to applications, but the lower limit of the thickness is preferably 2 μm or more, more preferably 3 μm or more, and still more preferably 4 um or more. Meanwhile, the upper limit of the thickness is preferably 300 μm or less, more preferably 250 um or less, still more preferably 200 um or less, and particularly preferably 100 um or less. When the thickness is small, the handleability of the substrate film is apt to be poor. Meanwhile, when the thickness is large, not only the substrate film causes a problem in terms of cost, but also poor planarity due to curling tendency is apt to occur when the substrate film is wound into a roll and preserved.

The haze of the polypropylene film to be used as the substrate of the present invention preferably has transparency from the viewpoint of the visibility of contents, and is specifically preferably 6% or less, more preferably 5% or less, and still more preferably 4% or less. The haze tends to be deteriorated, for example, when the stretching temperature and the heat setting temperature are too high, when a cooling roll (CR) temperature is high and the cooling rate of a stretched original fabric sheet is slow, and when a low molecular weight is too large, and therefore by adjusting these, the haze can be controlled within the above ranges. Herein, the haze was evaluated with use of a turbidimeter (NDH2000 manufactured by Nippon Denshoku Industries Co., Ltd.) in accordance with JIS K7136.

The substrate film layer in the present invention may be subjected to a corona discharge treatment, a glow discharge treatment, a flame treatment, or a surface roughening treatment, or may be subjected to a known anchor coating treatment, printing, or decoration or the like as long as the object of the present invention is not impaired. However, resins other than polyolefin such as polyurethane or polyester are generally used for anchor coating, and therefore it is preferable not to perform the anchor coating treatment from the viewpoint of monomaterial.

[Coating layer]

In the present invention, a coating layer is provided for the purpose of improving the gas barrier performance and adhesiveness of the substrate film. However, it is necessary to design the present invention while paying attention to the fact that environment loads occur, such as an increase in cost due to an increase in the number of steps by providing the coating layer, and difficulty in recycling depending on the film thickness.

The attached amount of the coating layer is preferably 0.10 to 0.50 $(g/m^2)$. The present inventors have found that when a coating layer containing a polyvinyl alcohol-based copolymer and an inorganic lamellar compound to be described later is used for the above-described polypropylene-based resin substrate, all of the gas barrier properties, the coating appearance, the adhesiveness, and the recyclability can be achieved at the same time by setting the attached amount to the above-mentioned specific range. This makes it possible to uniformly control the coating layer in coating, resulting in a film with less coating nonuniformity and defects. Since the coating layer is thin, the coating layer can contribute to the reduction of foreign matters during recycling utilization. The lower limit of the attached amount of the coating layer is preferably 0.15 $(g/m^2)$ or more, more preferably 0.20 $(g/m^2)$ or more, and still more preferably 0.25 $(g/m^2)$ or more, and the upper limit thereof is preferably 0.45 $(g/m^2)$ or less, more preferably 0.40 $(g/m^2)$ or less, and still more preferably 0.35 $(g/m^2)$ or less. When the attached amount of the coating layer exceeds 0.50 $(g/m^2)$, the gas barrier properties are improved, but a cohesive force in the coating layer is insufficient, and the uniformity of the coating layer is also deteriorated, and therefore nonuniformity (increase in haze, whitening) and defects may occur in the coating appearance, or the gas barrier properties and the adhesiveness may not be sufficiently exhibited. In terms of workability, a large film thickness may cause blocking to occur. Furthermore, there is a concern that the recyclability of the film is adversely affected. Meanwhile, when the film thickness of the coating layer is less than 0.10 $(g/m^2)$, sufficient gas barrier properties and adhesion between layers may not be obtained.

As the resin composition to be used for the coating layer to be formed on the surface of the laminated film of the present invention, a polyvinyl alcohol-based polymer is desirable. The polyvinyl alcohol-based polymer contains a vinyl alcohol unit as a main constituent component, and can be expected to greatly improve barrier performance due to high cohesiveness by a hydrogen bond structure. The polymerization degree and saponification degree of the polyvinyl alcohol-based polymer are determined from gas barrier properties that are intended and the viscosity of an aqueous coating solution and the like. The polymerization degree is preferably 2600 or less from the viewpoint of the workability of coating because coating is difficult due to high aqueous solution viscosity and easy gelation. When the saponification degree is less than 90%, sufficient oxygen gas barrier properties under high humidity cannot be obtained, and when the saponification degree exceeds 99.7%, it is difficult to adjust the aqueous solution, and gelation is apt to occur, which is not suitable for industrial production. Therefore, the saponification degree is preferably 90 to 99.7%, and more preferably 93 to 99%. In the present invention, various copolymerized or modified polyvinyl alcohol-based polymers such as a polyvinyl alcohol-based polymer obtained by copolymerizing ethylene and a polyvinyl alcohol-based polymer modified with silanol can also be used as long as workability and productivity are not impaired.

The coating layer of the present invention contains an inorganic lamellar compound. When the inorganic lamellar compound is present, a maze effect with respect to gases can be expected, and therefore the gas barrier properties are improved. Examples of the material include clay minerals (including synthetic products thereof) such as smectite, kaolin, mica, hydrotalcite, and chlorite. Specific examples thereof include montmorillonite, beidellite, saponite, hectorite, sauconite, stevensite, kaolinite, nacrite, dickite, halloysite, hydrolyzed halloysite, tetrasilic mica, sodium teniolite, muscovite, margarite, phlogopite, talc, antigorite, chrysotile, pyrophyllite, vermiculite, xanthophyllite, and chlorite. Furthermore, scale-like silica and the like can also be used as the inorganic lamellar compound. These may be used singly or two or more of them may be used in combination. Among them, smectite (including synthetic products thereof) is particularly preferable because of a high effect of improving water vapor barrier properties.

Inorganic lamellar compounds in which metal ions having oxidation-reduction properties, particularly iron ions are present are preferable. Furthermore, among these substances, montmorillonite, which is a kind of smectite, is preferable from the viewpoint of coating suitability and gas barrier properties. As the montmorillonite, known substances conventionally used for a gas barrier agent can be used.

For example, there is the following general formula:

$$(X,Y)_{2-3}Z_4O_{10}(OH)_2 \cdot mH_2O \cdot (W_\omega)$$

(In the formula, X represents Al, Fe (III), or Cr (III); Y represents Mg, Fe (II), Mn (II), Ni, Zn, or Li; Z represents Si or Al; W represents K, Na, or Ca; $H_2O$ represents interlayer water; and m and $\omega$ represent positive real numbers.)

Among them, substances in which W in the formula is Na are preferable from the viewpoint of cleavage in an aqueous medium.

The size and shape of the inorganic lamellar compound are not particularly limited, but the particle size (major axis) is preferably 5 $\mu$m or less, more preferably 4 $\mu$m or less, and still more preferably 3 $\mu$m or less. When the particle size is more than 5 $\mu$m, dispersibility is poor, and as a result, the coatability and coating appearance of the coating layer may be deteriorated. Meanwhile, the aspect ratio thereof is 50 to 5000, more preferably 100 to 4000, and still more preferably 200 to 3000.

The blending ratio of the polyvinyl alcohol-based copolymer and the inorganic lamellar compound in the coating layer of the present invention is preferably 75/25 to 35/65 (wt%), more preferably 70/30 to 40/60 (wt%), and still more preferably 65/35 to 45/55 (wt%). When the blending ratio of the inorganic lamellar compound is less than 25%, the barrier performance may be insufficient. Meanwhile, when the blending ratio is more than 65%, dispersibility may be deteriorated, resulting in deteriorated coatability and adhesiveness.

In the present invention, a ratio (P1/P2) of a peak intensity (P1) having an absorption maximum in a domain of 1040 $\pm$ 10 cm$^{-1}$ to a peak intensity (P2) having an absorption maximum in a domain of 3300 $\pm$ 10 cm$^{-1}$ in the total reflection infrared absorption spectrum of the coating layer needs to be within a range of 3.0 to 25.0. The ratio (P1/P2) is preferably within a range of 4.0 to 24.0, and more preferably within a range of 5.0 to 23.0. The peak at 1040 $\pm$ 10 cm$^{-1}$ is a peak derived from a silica molecular structure, and serves as an index indicating the amount of silica bonds derived from the inorganic lamellar compound in the coating layer. The peak at 3300 $\pm$ 10 cm$^{-1}$ is a peak derived from a hydroxyl group, and serves as an index indicating the amount of hydroxyl groups in the coating layer. (P1/P2) represents the ratio between silica bonds and hydroxyl groups. When the ratio is within the above ranges, silica particles are disposed in the film without inhibiting the hydrogen bonding of the hydroxyl groups, and as a result, gas barrier performance is exhibited to the maximum extent possible. Adhesion can also be exhibited at the same time. When (P1/P2) is less than 3.0, the amount of silica bonds in the coating layer is small, and a maze effect cannot be obtained, and therefore it may be difficult to obtain satisfactory gas barrier properties. As for workability, the coating layer may be apt to cause blocking to occur. Meanwhile, when (P1/P2) exceeds 25.0, the gas barrier properties are improved, but the film becomes brittle, which is disadvantageous in terms of adhesiveness when a laminated body is formed. In addition, the dispersibility of the coating liquid is deteriorated, and therefore there is a concern that poor appearance (increase in haze, whitening) occurs during coating. In order to set the value of (P1/P2) of the coating layer to the predetermined numerical ranges, it is necessary to set the predetermined attached amounts of the above-described materials, set the blending ratios of the materials to the above-described appropriate ranges, and combine the predetermined attached amounts and the blending ratios with drying and heat treatment conditions to be described later.

In the present invention, the arithmetic average roughness of the coating layer within a 2-pm square field angle with use of an atomic force microscope is preferably 2.0 to 8.0 nm. This makes it possible to maintain the uniformity of the coating layer and to exhibit stable barrier performance, and makes it possible to enhance adhesiveness and blocking resistance as a result of the formation of surface unevenness mainly derived from the coordination of the inorganic lamellar particles. The arithmetic average roughness is preferably 2.5 nm or more, more preferably 3.0 nm or more, and still more preferably 3.5 nm or more, and preferably 7.5 nm or less, more preferably 7.0 nm or less, and still more preferably 6.5 nm or less. When the arithmetic average roughness exceeds 8.0 nm, the surface becomes too rough and the uniformity of the coating layer is also deteriorated, and therefore nonuniformity and defects may occur in the coating appearance, leading to deteriorated printability, adhesiveness, and barrier properties. Meanwhile, when the arithmetic average roughness is less than 2.0 nm, the surface is too flat, and therefore adhesiveness and ink transfer properties during printing and the like may be deteriorated. Blocking resistance to be described later is also deteriorated, and blocking may occur when the film is wound into a roll.

In order to set the value of the arithmetic average roughness to the predetermined numerical ranges, it is necessary to set the predetermined attached amounts of the above-described materials, set the blending ratios of the materials to the above-described appropriate ranges, and combine the predetermined attached amounts and the blending ratios with the dilution conditions of the coating liquid and drying and heat treatment conditions to be described later.

In the present invention, a Martens hardness when the coating layer-side surface of the laminated film is measured with a test force of 0.1 mN is preferably 248 N/mm$^2$ or less, more preferably 245 N/mm$^2$ or less, still more preferably 240 N/mm$^2$ or less, particularly preferably 235 N/mm$^2$ or less, and most preferably 230 N/mm$^2$ or less. However, there is a concern that the winding of the film around the roll during processing and the blocking of the roll itself, and the like occur, and therefore it is desirable that the Martens hardness is not lower than 160 N/mm$^2$.

When the Martens hardness exceeds 248 N/mm$^2$, the surface is hard, and the followability of the surface of the resin is deteriorated in processing, resulting a reduced adhesive force. This increases the possibility of the occurrence of defects such as the delamination of the laminated film. In order to set the value of the Martens hardness to the predetermined numerical ranges, it is necessary to set the predetermined attached amounts of the above-described materials, set the blending ratios of the materials to the above-described appropriate ranges, and combine the predetermined attached amounts and the blending ratios with the dilution conditions of the coating liquid and drying and heat treatment conditions to be described later.

Various crosslinking agents may be blended in the coating layer of the present invention as long as the gas barrier properties and productivity are not impaired for the purpose of improving the cohesive force and wet heat resistance adhesiveness of the film. Examples of the crosslinking agent include a silicon-based crosslinking agent, an oxazoline compound, a carbodiimide compound, an epoxy compound, and isocyanate compound. Among them, the silicon-based crosslinking agent is particularly preferable from the viewpoint that water-resistant adhesiveness to the inorganic thin film layer can be particularly improved by blending the silicon-based crosslinking agent. In addition, an oxazoline compound, a carbodiimide compound, or an epoxy compound or the like may be used in combination as the crosslinking agent. However, in a case where recyclability is emphasized, it is preferable to blend no crosslinking agent.

In the present invention, film haze after the lamination of the coating layer is preferably 20% or less, more preferably 18% or less, and still more preferably 16% or less, from the viewpoint of the visibility of contents. When the haze is more than 20%, transparency is greatly deteriorated, and in addition, there is a concern that the unevenness of the surface is affected, which may lead to poor appearance in the subsequent printing process and the like. The haze can be adjusted by the composition ratio of the coating layer, solvent conditions, and a film thickness and the like. Herein, the haze is evaluated with use of a turbidimeter (NDH2000 manufactured by Nippon Denshoku Industries Co., Ltd.) in accordance with JIS K7136.

A method for coating with the resin composition for coating layer is not particularly limited as long as a layer is formed by coating the film surface. For example, a usual coating method such as gravure coating, reverse roll coating, wire bar coating, or die coating can be adopted.

When the coating layer is formed, the resin composition for coating layer is applied, then pre-dried at a relatively low temperature to first volatilize the solvent, and then subjected to main drying at a high temperature, to obtain a uniform film, which is preferable. The pre-drying temperature is preferably 80 to 110°C, more preferably 85 to 105°C, and still more preferably 90 to 100°C. When the pre-drying temperature is lower than 80°C, insufficient drying may occur in the coating layer. When the pre-drying temperature is higher than 110°C, drying proceeds before the coating layer wets and spreads, which may cause poor appearance.

Meanwhile, the main drying temperature is preferably 110 to 140°C, more preferably 115 to 135°C, and still more preferably 120 to 130°C. When the main drying temperature is lower than 110°C, the film formation of the coating layer does not proceed, a cohesive force and adhesiveness are deteriorated, and as a result, barrier properties may be adversely affected. When the main drying temperature exceeds 140°C, the film is excessively heated, and therefore the film may become brittle or wrinkles due to thermal shrinkage may become large.

A pre-drying time is preferably 3.0 to 10.0 seconds, more preferably 3.5 to 9.5 seconds, and still more preferably 4.0 to 9.0 seconds. A main drying time is preferably 3.0 to 10.0 seconds, more preferably 3.5 to 9.5 seconds, and still more preferably 4.0 to 9.0 seconds. However, drying conditions also vary depending on the type of a heating medium and the intake and exhaust conditions of a drying furnace, and thus attention is required. In addition to the drying, it is also more effective to add an additional heat treatment for 1 to 4 days in a low temperature range as much as possible, specifically, in a temperature range of 40 to 60°C in order to cause the film formation of the coating layer to proceed.

[Packaging material]

When the laminated film of the present invention is used as a packaging material, it is preferable to form a laminated body on which a heat-sealable resin layer called a sealant is formed. The heat-sealable resin layer is usually provided on the coating layer, but may be provided on the outer side of the substrate film layer (the surface opposite to the coating layer forming surface). The heat-sealable resin layer is usually formed by an extrusion lamination method or a dry lamination method. As a thermoplastic polymer that forms the heat-sealable resin layer, any one may be used as long as the sealant adhesiveness can be sufficiently exerted. Polyethylene resins such as olefin-based HDPE, LDPE and LLDPE, a polypropylene resin, an ethylene-vinyl acetate copolymer, an ethylene-$\alpha$-olefin random copolymer, and an ionomer resin can be used. Among them, LLDPE or a polypropylene resin having high versatility is particularly preferable from the viewpoint of durability, seal strength, price, and monomaterialization. The thickness of the sealant layer is preferably 20 to 100 $\mu$m, more preferably 30 to 90 **um,** and still more preferably 40 to 80 $\mu$m. When the thickness is less than 20 $\mu$m, sufficient sealing strength cannot be obtained, and the laminated body may have no tough feeling, resulting in difficult handling. Meanwhile, when the thickness is more than 100 **um,** the laminated body has high tough feeling, has deteriorated handleability as a bag, and may be expensive.

[Adhesive layer]

For the adhesive layer used in the present invention, a general-purpose adhesive for lamination can be used. For example, it is possible to used solvent (free) type, aqueous type, and hot melt type adhesives containing poly(ester) urethane-based materials, polyester-based materials, polyamide-based materials, epoxy-based materials, poly (meth)acrylic-based materials, polyethyleneimine-based materials, ethylene-(meth)acrylic acid-based materials, polyvinyl acetate-based materials, (modified) polyolefin-based materials, polybutadiene-based materials, wax-based materials, casein-based materials and the like as a main component. Among these, urethane-based or polyester-based materials are preferable in consideration of heat resistance and flexibility that can follow the dimensional changes of each base material. As a method for laminating the adhesive layer, for example, the adhesive layer can be coated by a direct gravure coating method, a reverse gravure coating method, a kiss coating method, a die coating method, a roll coating method, a dip coating method, a knife coating method, a spray coating method, a fountain coating method, and other methods. The coated amount after drying is preferably 1 to 8 g/m$^2$ in order to exert sufficient adhesive properties. The coated amount is more preferably 2 to 7 g/m$^2$, still more preferably 3 to 6 g/m$^2$. When the coated amount is less than 1 g/m$^2$, it is difficult to paste the entire surface and the adhesive strength decreases. When the coated amount is more than 8 g/m$^2$, it takes time to completely cure the film, unreacted substances are likely to remain, and the adhesive strength decreases.

Furthermore, in the laminated film of the present invention, at least one or more printed layers, and one or more different plastic films and/or sheets of paper may be laminated between the substrate film layer and the heat-sealable resin layer, or the outside thereof.

As a printing ink for forming the printed layer, an aqueous and solvent-based resin-containing printing ink can be preferably used. Examples of the resin used in the printing ink include an acrylic resin, a urethane-based resin, a polyester-based resin, a vinyl chloride-based resin, a vinyl acetate copolymer resin, and a mixture thereof. The printing ink may contain known additives such as an anti-static agent, a light blocking agent, an ultraviolet absorber, a plasticizer, a lubricant, a filler, a coloring agent, a stabilizer, a lubricant, a defoaming agent, a crosslinking agent, an anti-blocking agent, and an oxidation inhibitor. A printing method for providing the printing layer is not particularly limited, and known printing methods such as an offset printing method, a gravure printing method, and a screen printing method can be used. In order to dry the solvent after printing, known drying methods such as hot air drying, hot roll drying, and infrared drying can be used.

The oxygen transmission rate of the laminated body of the present invention at 23°C and 65% RH is preferably 50 ml/m$^2$·d·MPa or less from the viewpoint of exerting favorable gas barrier properties. Furthermore, the oxygen transmission rate can be set to preferably 40 ml/m$^2$·d·MPa or less, and more preferably 30 ml/m$^2$·d·MPa or less by controlling the above-mentioned coating layer components and attached amounts and the like. When the oxygen transmission rate exceeds 50 ml/m$^2$·d·MPa, it is difficult to cope with uses required to exhibit high gas barrier properties. Meanwhile, when the oxygen transmission rate is less than 1 ml/m$^2$·d·MPa, barrier performance is excellent, but a residual solvent is less likely to permeate to the outside of a bag, and the amount of the residual solvent transferred to contents may relatively increase, which is not preferable. A preferable lower limit of the oxygen transmission rate is 1 ml/m$^2$·d·MPa or more.

The water vapor transmission rate of the laminated body of the present invention at 40°C and 90% RH is preferably 4.0 g/m$^2$·d or less from the viewpoint of exerting favorable gas barrier properties. Furthermore, the water vapor transmission rate can be set to preferably 3.5 g/m$^2$·d or less, and more preferably 3.0 g/m$^2$·d or less by controlling the above-mentioned coating layer components and attached amounts. When the water vapor transmission rate exceeds 4.0 g/m$^2$·d, it is difficult to cope with uses required to exhibit high gas barrier properties. Meanwhile, when the water vapor permeation rate is less than 0.1 g/m$^2$·d, barrier performance is excellent, but a residual solvent is less likely to permeate to the outside of a bag, and therefore the amount of the residual solvent transferred to the contents may relatively increase, which is not preferable. A preferable lower limit of the water vapor transmission rate is 0.1 g/m$^2$·d or more.

The laminate strength of the laminated body of the present invention under conditions of 23°C×65% RH is preferably 1.0 N/15 mm or more, more preferably 1.5 N/15 mm or more, and still more preferably 2.0 N/15 mm or more. When the laminate strength is less than 1.0 N/15 mm, peeling occurs due to a bending load or heat at the time of sealing, and therefore barrier properties may be deteriorated or contents may leak out. Furthermore, hand-cutting properties may be deteriorated.

EXAMPLES

Next, the present invention will be described in more detail by way of Examples, but the present invention is not limited to the following examples. The evaluation of films was performed by the following measurement methods.

(1) Thickness of laminated film

The thickness of a laminated film was measured with use of a dial gauge in accordance with JIS K7130-1999 A method.

(2) Haze of laminated film

The haze of a laminated film was measured with use of a haze meter NDH-2000 (manufactured by Nippon Denshoku Industries Co., Ltd.) in accordance with JIS K7136.

(3) Attached amount of coating layer

In each of Examples and Comparative Examples, each laminated film obtained at the stage of laminating a coating layer on a substrate film was used as a sample, and a 100 mm × 100 mm test piece was cut out from this sample. The coating layer was wiped with ethanol, and an attached amount of the coating layer was calculated from the mass change of the film before and after wiping.

(4) Method for measuring total reflection infrared absorption spectrum of laminated film

In each of Examples and Comparative Examples, the total reflection infrared absorption spectrum of the coating layer surface of each single laminated film obtained at the stage of laminating a coating layer on a substrate film was measured by total reflection absorption infrared spectroscopy. A peak intensity (P1) having an absorption maximum in a domain of 1040 ± 10 cm$^{-1}$ and a peak intensity (P2) having an absorption maximum in a domain of 3000 ± 10 cm$^{-1}$ were determined, and the intensity ratio (P1/P2) thereof was calculated. The intensity of each peak was calculated from a peak height obtained by vertically connecting a base line with zero absorbance and the top of each peak.

(5) Measurement Method of Martens hardness (N/mm$^2$)

A sample of about 2 cm square was cut out from the obtained laminated film, and a pressure-sensitive adhesive was used to secure a surface opposite to a coating layer-side surface that was to be measured onto a glass plate having a thickness about 1 mm. Then, the sample was left to stand for 12 hours in an environment of 23°C and 50% RH to be conditioned. The sample was measured under the following measurement conditions by a method in accordance with IS014577-1 (2002) using a dynamic ultramicrohardness tester ("DUH-211" manufactured by Shimadzu Corporation). Measurement was performed 10 times at different positions of the film. The maximum and minimum values were discarded, and the average value of the remaining 8 points was obtained.

<Measurement conditions>

(Setting)

- Measuring environment: Temperature 23°C and relative humidity 50%
- Test mode: Load-unload test
- Indenter used: Dihedral angle 115 degrees, triangular pyramid indenter
- Elastic modulus of indenter: 1.140×10$^6$ N/mm$^2$
- Poisson's ratio of indenter: 0.07
- Cf-Ap, As correction: Yes
- Test force: 0.10 mN
- Load speed: 0.0050 mN/sec
- Load holding time: 5 sec
- Unload holding time: 0 sec

A Martens hardness was obtained from the following formula (1) from a slope (m) in which a depth between test forces of 50%F and 90%F (F=0.10 mN) was proportional to a square root of the test force in a test force-indentation depth curve.

$$\texttt{Martens hardness HMs = 1/(26.43 × m}^2\texttt{) .... (1)}$$

(6) Method for measuring arithmetic average roughness of coating layer

The surface roughness of the laminated film was measured with use of a scanning probe microscope (SPM) ("SPM9700" manufactured by Shimadzu Corporation) (cantilever: OMCL-AC200TS available from Olympus Corporation was used, observation mode: phase mode). Specifically, an SPM image was obtained within a 2-pm square field angle on the film surface. In the obtained image, inclination correction, which was a function of a software attached to the SPM, was used so as to perform inclination correction in X-, Y-, and Z-directions, and thereafter the value of an arithmetic average roughness was calculated. The arithmetic average roughness was a value obtained by removing a surface undulation component longer than a predetermined wavelength from a cross-sectional curve by a high-pass filter, extracting only a reference length in the direction of the average line of a roughness curve obtained thereby from the roughness curve, taking an X axis in the direction of the average line of the extracted portion and a Y axis in the direction of a vertical magnification ratio, and two-dimensionally expanding a value obtained by the following formula when the roughness curve was represented by y = f(X).

$$Ra = 1/L\int L0 \ |f(x)|dx \quad L: \ reference \ length$$

(7) Method for evaluating oxygen transmission rate

In each of Examples and Comparative Examples, the oxygen transmission rate of each laminated film obtained at the stage of laminating a coating layer on a substrate film as a sample was measured in an atmosphere at a temperature of 23°C and a humidity of 65% RH with use of an oxygen transmission rate measuring apparatus ("OX-TRAN (registered trademark) 1/50" manufactured by MOCON) in accordance with the JIS-K7126 B method. The oxygen transmission rate was measured in a direction in which oxygen permeated from the substrate film side to the coating layer side.

(8) Method for evaluating water vapor transmission rate

In each of Examples and Comparative Examples, the water vapor transmission rate of each laminated film obtained at the stage of laminating a coating layer on a substrate film as a sample was measured in an atmosphere at a temperature of 40°C and a humidity of 90% RH with use of a water vapor transmission rate measuring apparatus ("PERMATRAN-W 3/33MG" manufactured by MOCON) in accordance with the JIS-K7129 B method. The water vapor transmission rate was measured in the direction in which water vapor permeated from the substrate film side to the coating layer side.

(9) Evaluation of blocking resistance of laminated film

In each of Examples and Comparative Examples, each laminated film obtained at the stage of laminating a coating layer on a substrate film was used as a sample. Two sets of samples cut into strips with a width of 15 mm and a length of 200 mm were prepared. One drop (about 0.02 g) of water was added dropwise to the surface of the coating layer of one of the samples, and the samples were then superposed on each other so that the surface of the coating layer of the other sample faced the surface of the coating layer of the one sample. The samples were sandwiched between glass plates and dried at 40°C for 24 hours to evaporate moisture, and two strips were then peeled off to confirm the adhesion state of the film. Samples attached to such an extent that the film tore during peeling off were evaluated as poor, and samples capable of being smoothly peeled off without tearing of the film were evaluated as good.

(10) Evaluation of solvent volatility of coating layer

In each of Examples and Comparative Examples, each laminated film obtained at the stage of laminating a coating layer on a substrate film was used as a sample. When the coating layer was lightly pressed with a paper towel, samples in which the coating layer adhered to the paper towel were considered to have insufficient solvent volatilization and were evaluated as poor. Samples in which the coating layer did not adhere to the paper towel were considered to have sufficient solvent volatilization, and were evaluated as good.

(11) Evaluation of appearance of coating layer

In each of Examples and Comparative Examples, each laminated film obtained at the stage of laminating a coating layer on a substrate film was used as a sample. Samples in which the voids, bands, and nonuniformity and the like of the coating layer were observed by visual confirmation were considered to have poor appearance and were evaluated as poor, and samples in which the voids, the bands, and the unevenness were not observed were considered to have satisfactory appearance and were evaluated as good.

[Preparation of laminated body]

An ester-based adhesive (TM569/CAT10L manufactured by Toyo Morton Co., Ltd.) was applied onto the laminated body obtained in each of Examples and Comparative Examples. Then, an un-stretched polypropylene film (P1128 manufactured by Toyobo Co., Ltd.; thickness: 30 um; CPP) was dry-laminated on a metal roll heated to 60°C and subjected to aging at 40°C for 4 days to obtain a gas barrier laminated body for evaluation.

The adhesive was applied so as to have a thickness of 3 μm after the drying treatment to obtain a laminated body A. The adhesive was applied so as to have a thickness of 1.5 um after the drying treatment to obtain a laminated body B. The adhesive was applied so as to have a thickness of 0.8 um after the drying treatment to obtain a laminated body C.

(12) Method for evaluating lamination strength

Each of the laminated bodies A to C prepared above was cut into a test piece having a width of 15 mm and a length of 200 mm, and the lamination strength (normal state) of the laminated body was measured with use of a Tensilon universal material testing machine ("Tensilon UMT-II-500 type" manufactured by Toyo Baldwin Co., Ltd.) at a temperature of 23°C and a relative humidity of 65%. As the measurement of the lamination strength, the strength was measured when the laminated film layer and heat-sealable resin layer of each of the laminated films obtained in Examples and Comparative Examples were peeled off from each other at a peeling angle of 90 degrees at a tension speed of 200 mm/min.

The details of the coating liquids used in the present Examples and Comparative Examples are described below. The coating liquids were used in Examples 1 to 6 and Comparative Examples 1 to 8 and shown in Table 2.

[Polyvinyl alcohol resin (A)]

Into 90 parts by mass of purified water, 10 parts by mass of a completely saponified polyvinyl alcohol resin (manufactured by Nippon Synthetic Chemical Industry Co., Ltd., trade name: G Polymer OKS8049Q, (saponification degree: 99.0% or more, average polymerization degree: 450) was added, followed by heating to 80°C while stirring. Then, the mixture was stirred for about 1 hour.

Thereafter, the mixture was cooled to room temperature, thereby obtaining a substantially transparent polyvinyl alcohol solution (PVA solution) having a solid content of 10%.

[Inorganic lamellar compound dispersion liquid (B)]

5 parts by mass of montmorillonite (trade name: Kunipia F manufactured by Kunimine Industries Co., Ltd.) as an inorganic lamellar compound was added into 95 parts by mass of purified water while being stirred, and the mixture was sufficiently dispersed by a homogenizer at a setting of 1500 rpm. Thereafter, this was kept at 23°C for 1 day to obtain an inorganic lamellar compound dispersion liquid having a solid content of 5%.

[Coating liquid 1 used for coating layer]

The respective materials were mixed together at the following blending ratios to prepare a coating liquid (resin composition for coating layer).

| | |
|---|---|
| Ion exchange water | 20.00% by mass |
| Isopropyl alcohol | 15.00% by mass |
| Polyvinyl alcohol resin (A) | 35.00% by mass |
| Inorganic lamellar compound dispersion liquid (B) | 30.00% by mass |

[Coating liquid 2 used for coating layer]

The respective materials were mixed together at the following blending ratios to prepare a coating liquid (resin composition for coating layer).

| | |
|---|---|
| Ion exchange water | 15.00% by mass |
| Isopropyl alcohol | 15.00% by mass |
| Polyvinyl alcohol resin (A) | 30.00% by mass |
| Inorganic lamellar compound dispersion liquid (B) | 40.00% by mass |

[Coating liquid 3 used for coating layer]

The respective materials were mixed together at the following blending ratios to prepare a coating liquid (resin composition for coating layer).

| | |
|---|---|
| Ion exchange water | 10.00% by mass |
| Isopropyl alcohol | 15.00% by mass |
| Polyvinyl alcohol resin (A) | 25.00% by mass |
| Inorganic lamellar compound dispersion liquid (B) | 50.00% by mass |

[Coating liquid 4 used for coating layer]

The respective materials were mixed together at the following blending ratios to prepare a coating liquid (resin composition for coating layer).

| | |
|---|---|
| Ion exchange water | 5.00% by mass |
| Isopropyl alcohol | 15.00% by mass |
| Polyvinyl alcohol resin (A) | 20.00% by mass |
| Inorganic lamellar compound dispersion liquid (B) | 60.00% by mass |

[Coating liquid 5 used for coating layer]

The respective materials were mixed together at the following blending ratios to prepare a coating liquid (resin composition for coating layer).

| | |
|---|---|
| Ion exchange water | 35.00% by mass |
| Isopropyl alcohol | 15.00% by mass |
| Polyvinyl alcohol resin (A) | 50.00% by mass |

[Coating liquid 6 used for coating layer]

The respective materials were mixed together at the following blending ratios to prepare a coating liquid (resin composition for coating layer).

| | |
|---|---|
| Ion exchange water | 30.00% by mass |
| Isopropyl alcohol | 15.00% by mass |
| Polyvinyl alcohol resin (A) | 45.00% by mass |
| Inorganic lamellar compound dispersion liquid (B) | 10.00% by mass |

[Coating liquid 7 used for coating layer]

The respective materials were mixed together at the following blending ratios to prepare a coating liquid (resin composition for coating layer).

| | |
|---|---|
| Isopropyl alcohol | 15.00% by mass |
| Polyvinyl alcohol resin (A) | 15.00% by mass |
| Inorganic lamellar compound dispersion liquid (B) | 70.00% by mass |

[Coating liquid 8 used for coating layer]

The following materials were mixed at the mass ratios shown below and stirred for 30 minutes or more to be dissolved. Next, undissolved matters were removed with use of a filter having nominal filtration accuracy of 50 um to prepare a coating liquid (resin composition for coating layer).

| | |
|---|---|
| Ion exchange water | 37.50% by mass |
| Polyvinylidene chloride resin (C) | 62.50% by mass |

(Saran Latex L557 manufactured by Asahi Kasei Chemicals Corporation; solid content ratio: 48%)

(Coating of coating liquid on film (lamination of coating layer))

The coating liquid prepared above was applied onto the corona-treated surface of the substrate film by a gravure roll coating method, pre-dried at 90°C for 4 seconds, and then subjected to main drying at 130°C for 4 seconds to obtain a coating layer. The attached amount of the coating liquid after drying was 0.25 g/m$^2$ (Dry). After that, post-heating was performed at 40°C for 2 days. The coating liquids constituting the coating layer, temperatures during drying, and post-heating treatment conditions were changed as shown in Table 2 in each of Examples and Comparative Examples.

As described above, laminated films each including the coating layer on the substrate film were prepared.

For a substrate layer (A), a polypropylene homopolymer PP-1 shown in Table 1 was used.

For a surface layer (B), there was used a blend of 43.2% by weight of a polypropylene homopolymer PP-2 shown in Table 1, 52.0% by weight of an ethylene copolymerization polypropylene polymer PP-4 shown in Table 1, and 4.8% by weight of an antiblocking agent-containing masterbatch FTX0627G. At this time, the melt flow rate (g/10 min) of a polypropylene-based resin composition constituting the surface layer (B) was 5.1.

For a surface layer (C), there was used a blend of 93.6% by weight of a polypropylene homopolymer PP-1 shown in Table 1 and 6.4% by weight of an antiblocking agent-containing masterbatch FTX0627G.

Using a 45 mm extruder for the substrate layer (A), a 25 mm extruder for the surface layer (B), and a 20 mm extruder for the surface layer (C), raw material resins were melted at 250°C, co-extruded from a T die into a sheet, cooled and solidified so that the surface layer (B) was in contact with a cooling roll at 30°C, and then stretched 4.5 times in a machine direction (MD) at 135°C. Then, in a state where both ends in a film transverse direction (TD) were pinched by clips in a tenter, the film was preheated at 173°C, then stretched 8.2 times in the transverse direction (TD) at 164°C, and subjected to heat setting at 171°C while being relaxed by 6.7% in the transverse direction (TD).

Thus, a biaxially oriented polypropylene-based film having a structure of surface layer (B)/substrate layer (A)/surface layer (C) was obtained.

The surface of the surface layer (B) of the biaxially oriented polypropylene-based film was subjected to a corona treatment under a condition of an applied current value: 0.75 A using a corona treatment machine manufactured by Softal Corona and Plasma GmbH, and then wound up with a winder. The thickness of the obtained film was 20 μm (the thicknesses of the surface layer (B), substrate layer (A), and surface layer (C) were respectively 1.3 um, 17.7 um, and 1.0 μm). A biaxially-oriented polypropylene-based film including the surface layer (B) having a Martens hardness of 248 N/mm$^2$ or less was used.

In Comparative Example 7, a high heat resistance/high rigidity type P2171 PYLEN film was used, which had a thickness of 20 um, included no anti-static material, and was manufactured by Toyobo Co., Ltd.. In Comparative Example 8, a PYLEN film P2102 manufactured by Toyobo Co., Ltd. and having a thickness of 20 μm was used.

The obtained laminated films were evaluated. The results are shown in Table 2.

[Table 1]

| Polypropylene-based resin | PP-1 | PP-2 | PP-3 | PP-4 |
|---|---|---|---|---|
| Raw material monomer | Propylene | Propylene | Propylene | Propylene, Ethylene |
| Resin stereoregularity (meso-pentad fraction (%)) | 98.7 | 98.4 | 98.9 | Unmeasurable |
| Amount of ethylene copolymerization (mol%) | 0.0 | 0.0 | 0.0 | 3.0 |
| MFR (g/10 min, 230°C, 2.16 kgf) | 7.6 | 3.0 | 1.9 | 7.0 |
| Molecular weight (Mn) | 67,500 | 79,400 | 80,000 | 80,000 |
| Molecular weight (Mw) | 270,000 | 312,000 | 360,000 | 220,000 |
| Molecular weight distribution (Mw/Mn) | 4.0 | 3.9 | 4.5 | 2.7 |
| DSC melting peak temperature (°C) | 168.0 | 163.9 | 163.3 | 125.3 |
| DSC melting peak area (J/g) | 105.2 | 98.6 | 94.3 | 64.3 |

[Table 2A]

| | Substrate | | Coating liquid [name and % by mass ratio] | | | | Coating layer [name and % by mass ratio] | | | Attached amount [g/m²] | Drying conditions | | | | Volatilization of solvent in coating layer | Appearance of coating layer |
| | | | | | | | | | | | Pre-drying | | Main drying | | | |
| | Material | [% by mass ratio] | Water | IPA | Polyvinyl alcohol resin (A) | Inorganic lamellar compound dispersion liquid (B) | (A) | (B) | (C) | | Temperature (°c) | Time (seconds) | Temperature (°c) | Time (seconds) | | |
| Example 1 | Easily adhesive OPP | 100 | 20 | 15 | 35 | 30 | 70 | 30 | - | 0.40 | 90 | 4 | 130 | 4 | Good | Good |
| Example 2 | Easily adhesive OPP | 100 | 15 | 15 | 30 | 40 | 60 | 40 | - | 0.40 | 90 | 4 | 130 | 4 | Good | Good |
| Example 3 | Easily adhesive OPP | 100 | 10 | 15 | 25 | 50 | 50 | 50 | - | 0.40 | 90 | 4 | 130 | 4 | Good | Good |
| Example 4 | Easily adhesive OPP | 100 | 5 | 15 | 20 | 60 | 40 | 60 | - | 0.40 | 90 | 4 | 130 | 4 | Good | Good |
| Example 5 | Easily adhesive OPP | 100 | 10 | 15 | 25 | 50 | 50 | 50 | - | 0.20 | 90 | 4 | 130 | 4 | Good | Good |
| Example 6 | Easily adhesive OPP | 100 | 10 | 15 | 25 | 50 | 50 | 50 | - | 0.50 | 90 | 4 | 130 | 4 | Good | Good |
| Comparative Example 1 | Easily adhesive OPP | 100 | 35 | 15 | - | 50 | 100 | - | - | 0.40 | 90 | 4 | 130 | 4 | Good | Good |
| Comparative Example 2 | Easily adhesive OPP | 100 | 30 | 15 | 45 | 10 | 90 | 10 | - | 0.40 | 90 | 4 | 130 | 4 | Good | Good |

(continued)

| | Substrate | | Coating liquid [name and % by mass ratio] | | | | Coating layer [name and % by mass ratio] | | | | Drying conditions | | | | Volatilization of solvent in coating layer | Appearance of coating layer |
|---|---|---|---|---|---|---|---|---|---|---|---|---|---|---|---|---|
| | Material | [% by mass ratio] | Water | IPA | Polyvinyl alcohol resin (A) | Inorganic lamellar compound dispersion liquid (B) | (A) | (B) | (C) | Attached amount [g/m²] | Pre-drying | | Main drying | | | |
| | | | | | | | | | | | Temperature (°c) | Time (seconds) | Temperature (°c) | Time (seconds) | | |
| Comparative Example 3 | Easily adhesive OPP | 100 | - | 15 | 15 | 70 | 30 | 70 | - | 0.40 | 90 | 4 | 130 | 4 | Good | Good |
| Comparative Example 4 | Easily adhesive OPP | 100 | 10 | 15 | 25 | 50 | 50 | 50 | - | 0.08 | 90 | 4 | 130 | 4 | Good | Good |
| Comparative Example 5 | Easily adhesive OPP | 100 | 10 | 15 | 25 | 50 | 50 | 50 | - | 1.5 | 90 | 4 | 130 | 4 | Good | Good |
| Comparative Example 6 | Easily adhesive OPP | 100 | - | - | - | - | - | - | 100 | 1.5 | 90 | 4 | 130 | 4 | Good | Good |
| Comparative Example 7 | High heat resistant OPP | 100 | 15 | 15 | 30 | 40 | 60 | 40 | - | 0.40 | 90 | 4 | 130 | 4 | Good | Good |
| Comparative Example 8 | General OPP | 100 | 15 | 15 | 30 | 40 | 60 | 40 | - | 0.40 | 90 | 4 | 130 | 4 | Good | Good |

[Table 2B]

| | Evaluation item | | | | | | | | | | | | |
| | Single film Laminated body | | | | | | | | | | | | |
| | FT-IR peak | | | Oxygen transmission rate | Water vapor transmission rate | Haze | Surface roughness | Blocking resistance | Martens hardness HMs | Lamination strength | | | Monomaterialization |
| | | | | | | | | | | [N/15 mm] | | | |
| | P1 (1040 cm⁻¹) | P2 (3300 cm⁻¹) | (P1/P2) | [ml/m² ·day· MPa] | [g/m² ·d] | [%] | [nm] | | N/mm² | A [adhesive thickness: 3 μm] | B [adhesive thickness: 1.5 μm] | C [adhesive thickness: 0.8 μm] | |
| Example 1 | 0.042 | 0.005 | 8 | 37 | 3.0 | 10 | 3.7 | Good | 238 | 4.8 | 3.3 | 2.8 | ○ |
| Example 2 | 0.075 | 0.013 | 6 | 25 | 2.8 | 11 | 3.5 | Good | 235 | 4.5 | 3.5 | 2.8 | ○ |
| Example 3 | 0.047 | 0.002 | 24 | 23 | 2.8 | 10 | 4.0 | Good | 237 | 4.3 | 3.3 | 2.5 | ○ |
| Example 4 | 0.115 | 0.005 | 23 | 20 | 2.7 | 12 | 4.7 | Good | 241 | 4.0 | 3.0 | 2.0 | ○ |
| Example 5 | 0.061 | 0.004 | 15 | 39 | 2.9 | 10 | 3.1 | Good | 245 | 4.2 | 3.1 | 2.4 | ○ |
| Example 6 | 0.050 | 0.002 | 25 | 21 | 3.1 | 12 | 4.1 | Good | 233 | 3.9 | 2.8 | 2.1 | ○ |
| Comparative Example 1 | 0.021 | 0.018 | 1 | 1250 | 5.1 | 3 | 0.5 | Poor | 244 | 4.3 | 3.5 | 3.0 | ○ |
| Comparative Example 2 | 0.012 | 0.027 | 0 | 240 | 3.3 | 8 | 1.7 | Poor | 245 | 4.6 | 3.2 | 2.6 | ○ |
| Comparative Example 3 | 0.130 | 0.001 | 130 | 200 | 3.0 | 13 | 5.5 | Good | 241 | 0.5 | 0.4 | 0.4 | ○ |
| Comparative Example 4 | 0.057 | 0.006 | 10 | 360 | 5.3 | 8 | 4.2 | Good | 238 | 4.0 | 3.6 | 2.2 | ○ |
| Comparative Example 5 | 0.056 | 0.002 | 28 | 30 | 3.9 | 11 | 4.5 | Good | 235 | 3.5 | 2.9 | 1.8 | Δ |
| Comparative Example 6 | 0.045 | 0.000 | - | 53 | 5 | 5 | 4.4 | Good | 234 | 4.5 | 3.3 | 2.7 | × |
| Comparative Example 7 | 0.070 | 0.013 | 5 | 23 | 3.0 | 10 | 4.0 | Good | 320 | 1.6 | 1.0 | 0.6 | ○ |

17

| | Evaluation item | | | | | | | | | | | | |
|---|---|---|---|---|---|---|---|---|---|---|---|---|---|
| | Single film | | | | | | | Laminated body | | | | | |
| | FT-IR peak | | | Oxygen transmission rate | Water vapor transmission rate | Haze | Surface roughness | Blocking resistance | Martens hardness HMs | Lamination strength | | | Monomaterialization |
| | | | | | | | | | | [N/15 mm] | | | |
| | P1 (1040 cm$^{-1}$) | P2 (3300 cm$^{-1}$) | (P1/P2) | [ml/m$^2$·day·MPa] | [g/m$^2$·d] | [%] | [nm] | | N/mm$^2$ | A [adhesive thickness: 3 μm] | B [adhesive thickness: 1.5 μm] | C [adhesive thickness: 0.8 μm] | |
| Comparative Example 8 | 0.073 | 0.015 | 5 | 24 | 2.8 | 10 | 4.0 | Good | 300 | 1.7 | 0.9 | 0.8 | ○ |

INDUSTRIAL APPLICABILITY

According to the present invention, it is possible to provide a laminated film which can form a laminated structure mainly composed of a polypropylene film and composed of substantially a single resin species having a low environmental load, and has required performances such as gas barrier properties and adhesiveness required for a packaging material. Moreover, the laminated film of the present invention provides few processing steps, is excellent in workability, and can be easily produced, whereby a gas barrier film excellent in both economic efficiency and production stability and having homogeneous characteristics can be provided.

**Claims**

1. A laminated film comprising:

   a substrate film; and
   a coating layer including a polyvinyl alcohol-based copolymer and an inorganic lamellar compound on at least one surface of the substrate film,
   wherein the laminated film satisfies the following requirements (a) to (d):

   (a) the substrate film is a stretched film containing a propylene-based resin;
   (b) an attached amount of the coating layer is 0.10 g/m$^2$ or more and 0.50 g/m$^2$ or less;
   (c) in a total reflection infrared absorption spectrum of the laminated film, a ratio (P1/P2) of a peak intensity (P1) having an absorption maximum in a domain of 1040 $\pm$ 10 cm$^{-1}$ to a peak intensity (P2) having an absorption maximum in a domain of 3300 $\pm$ 10 cm$^{-1}$ is within a range of 3.0 to 25.0; and
   (d) a Martens hardness of a coating layer-side surface of the laminated film measured with a test force of 0.1 mN is 248 N/mm$^2$ or less.

2. The laminated film according to claim 1, wherein the coating layer on the laminated film has an arithmetic average roughness of 2.0 to 8.0 nm in a 2-$\mu$m square.

3. The laminated film according to any one of claims 1 and 2, wherein the laminated film has an oxygen transmission rate of 50 ml/m$^2$·d·MPa or less in an environment of 23°C and 65% RH and a water vapor transmission rate of 4 g/m$^2$·d or less in an environment of 40°C and 90% RH.

4. The laminated film according to any one of claims 1 to 3, wherein the inorganic lamellar compound of the coating layer contains a montmorillonite-based compound as a constituent component.

5. A packaging material obtained by laminating an olefin-based sealant layer on one surface of the laminated film according to any one of claims 1 to 4.

**INTERNATIONAL SEARCH REPORT**

International application No.

**PCT/JP2022/012058**

| A. | CLASSIFICATION OF SUBJECT MATTER |
|---|---|

*B32B 27/32*(2006.01)i; *B32B 9/00*(2006.01)i; *B32B 27/30*(2006.01)i; *B65D 65/40*(2006.01)i
FI:   B32B27/32 C; B32B27/30 102; B32B9/00 A; B65D65/40 D

According to International Patent Classification (IPC) or to both national classification and IPC

| B. | FIELDS SEARCHED |
|---|---|

Minimum documentation searched (classification system followed by classification symbols)

B32B9/00; B32B27/00-27/32; B05D7/00-7/26; B65D65/40;

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2003-326653 A (TORAY IND INC) 19 November 2003 (2003-11-19) <br> claims, paragraphs [0001]-[0072] | 1, 2, 4 |
| Y | | 3, 5 |
| Y | JP 11-333967 A (TOPPAN PRINTING CO LTD) 07 December 1999 (1999-12-07) <br> claims, paragraphs [0010]-[0048] | 3, 5 |
| Y | JP 6-93133 A (SUMITOMO CHEM CO LTD) 05 April 1994 (1994-04-05) <br> claims, paragraphs [0006]-[0030], [0043]-[0044], [0046], table 2, paragraphs [0048]-[0050] | 3, 5 |
| A | JP 2004-17615 A (DAICEL CHEM IND LTD) 22 January 2004 (2004-01-22) <br> entire text | 1-5 |
| A | JP 2020-116750 A (TOPPAN PRINTING CO LTD) 06 August 2020 (2020-08-06) <br> entire text | 1-5 |
| A | JP 2021-503037 A (TOPPAN PRINTING CO LTD) 04 February 2021 (2021-02-04) <br> entire text | 1-5 |

☑ Further documents are listed in the continuation of Box C.          ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **18 April 2022** | **10 May 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

| International application No. |
| --- |
| **PCT/JP2022/012058** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2020/116544 A1 (TOPPAN PRINTING CO LTD) 11 June 2020 (2020-06-11)<br>    entire text | 1-5 |
| A | JP 2008-73926 A (TOHCELLO CO LTD) 03 April 2008 (2008-04-03)<br>    entire text | 1-5 |
| A | WO 2016/158794 A1 (TOPPAN PRINTING CO LTD) 06 October 2016 (2016-10-06)<br>    entire text | 1-5 |
| A | US 2019/0022988 A1 (QUINLYTE HOLDING B.V) 24 January 2019 (2019-01-24)<br>    entire text | 1-5 |
| A | US 2018/0170017 A1 (AMCOR FLEXIBLES KREUZLINGEN AG) 21 June 2018<br>(2018-06-21)<br>    entire text | 1-5 |
| A | WO 95/34396 A1 (MOBIL OIL CORPORATION) 21 December 1995 (1995-12-21)<br>    entire text | 1-5 |

Form PCT/ISA/210 (second sheet) (January 2015)

## INTERNATIONAL SEARCH REPORT
### Information on patent family members

International application No.

**PCT/JP2022/012058**

| Patent document cited in search report | | | Publication date (day/month/year) | Patent family member(s) | | Publication date (day/month/year) |
|---|---|---|---|---|---|---|
| JP | 2003-326653 | A | 19 November 2003 | (Family: none) | | |
| JP | 11-333967 | A | 07 December 1999 | (Family: none) | | |
| JP | 6-93133 | A | 05 April 1994 | US 5700560 A<br>claims, column 3, line 46 to column 12, line 2, column 13, line 58 to column 14, line 5, table 2, column 19, line 24 to column 20, line 52<br>EP 590263 A2<br>CN 1082071 A<br>AU 4200693 A<br>CA 2101037 A | | |
| JP | 2004-17615 | A | 22 January 2004 | (Family: none) | | |
| JP | 2020-116750 | A | 06 August 2020 | (Family: none) | | |
| JP | 2021-503037 | A | 04 February 2021 | US 2019/0126601 A1<br>WO 2019/088265 A1<br>BR 112020008463 A | | |
| WO | 2020/116544 | A1 | 11 June 2020 | US 2021/0291501 A1 | | |
| JP | 2008-73926 | A | 03 April 2008 | (Family: none) | | |
| WO | 2016/158794 | A1 | 06 October 2016 | US 2018/0009206 A1<br>EP 3275651 A1<br>CN 107405896 A | | |
| US | 2019/0022988 | A1 | 24 January 2019 | EP 3434469 A1<br>NL 2019329 B<br>CN 109292237 A | | |
| US | 2018/0170017 | A1 | 21 June 2018 | WO 2017/005597 A1<br>EP 3317099 A1<br>CN 107969124 A<br>BR 112018000028 A | | |
| WO | 95/34396 | A1 | 21 December 1995 | AU 2604095 A<br>CA 2183770 A<br>ZA 9504571 A | | |

Form PCT/ISA/210 (patent family annex) (January 2015)

**REFERENCES CITED IN THE DESCRIPTION**

**Patent documents cited in the description**

- JP 2000052501 A
- JP H04359033 A
- JP 2003231221 A
- JP H04345841 A
- JP 2006095782 A
- JP H09111017 A
- JP 2005035167 A